# EUROPÄISCHE PATENTSCHRIFT

(11) **EP 3 217 566 B1**
(45) Veröffentlichungstag und Bekanntmachung des Hinweises auf die Patenterteilung: **01.08.2018**
(21) Anmeldenummer: 17159973.1
(22) Anmeldetag: 09.03.2017
(51) Int. Cl.: H04B 5/00, A01K 11/00, G06K 19/077

(54) **RFID-OHRMARKE**
RFID EAR TAG
ÉTIQUETTE AURICULAIRE RFID

(30) Priorität: 09.03.2016 DE 202016101289 U
(43) Veröffentlichungstag der Anmeldung: 13.09.2017
(73) Patentinhaber: Astra Gesellschaft Für Asset Management MbH&Co. Kg, 30890 Barsinghausen (DE)
(72) Erfinder: Stobbe, Anatoli, 30890 Barsinghausen (DE); Maaß, Norman, 30455 Hannover (DE)
(74) Vertreter: Patentanwälte Thömen & Körner

(56) Entgegenhaltungen:
- DE-A1- 19 822 383
- DE-A1-102007 059 168
- JP-A- 2013 090 633

## Beschreibung

Die Erfindung betrifft eine RFID-Ohrmarke nach dem Oberbegriff des Anspruchs 1.

RFID-Tiererkennung mit LF-oder HF-Technologie ist erprobt und etabliert. Die geringen Reichweiten dieser Frequenzbereiche erlauben jedoch nur das Identifizieren von Einzeltieren im Nahbereich.

Für die Überwachung von Hotspots, wie Tränken oder Futterautomaten, oder die Lokalisierung von Tiergruppen ist eine größere Reichweite erforderlich. Hier bietet die UHF-Technologie erhebliche Vorteile. Allerdings sind die maximal möglichen Abmessungen der Ohrmarken limitiert, so dass ein handelsübliches UHF-Inlay nicht verwendet werden kann. Weiterhin wird die Antenne erheblich durch das Tiergewebe verstimmt und gedämpft.

Darüber hinaus sind RFID-Ohrmarken durch erhebliche Umwelteinflüsse, wie aggressive Gase und Flüssigkeiten sowie durch hohe mechanische Beanspruchung, wie Reibung an Gegenständen und durch andere Tiere in ihrer Funktion gefährdet.
Aus der DE 20 2012 008 963 U1 ist eine RFID-Ohrmarke für UHF-Technologie bekannt, die einen RFID-Transponder mit einem Chip und einer Antenne umfasst. Der Chip ist dabei galvanisch über ein Anpassglied mit einer asymmetrischen Dipolantenne verbunden, deren eines Strahlerelement länger als deren anderes Strahlerelement ist und wobei das längere Strahlerelement zweimal rechtwinklig gefaltet ist und das kürzere Strahlerelement vollständig parallel überlappt.
Die beiden Strahlerelemente sind an ihren kalten Enden außerdem mit einer mittleren Metallisierungslage verbunden, wobei die mittlere Metallisierungslage über Dielektrikumlagen mit zwei äußeren Metallisierungslagen in Wirkverbindung steht und die zwei äußeren Metallisierungslagen mit einem durch das Ohr des Tieres geführten metallischen Stift kontaktiert sind. Diese Anordnung dient zur Erkennung von Manipulationen und ist nicht Bestandteil der Antenne. Aus der DE 198 22 383 A1 ist eine weitere RFID-Ohrmarke bekannt. Der Erfindung liegt die Aufgabe zu Grunde, eine RFID-Ohrmarke für UHF-Technologie dahingehend zu verbessern, dass eine möglichst große Lesereichweite erzielt wird und die Funktion auch bei hohen mechanischen Beanspruchungen gewährleistet ist.

Diese Aufgabe wird bei einer RFID-Ohrmarke nach dem Oberbegriff des Anspruchs 1 durch die Merkmale dieses Anspruchs gelöst. Weiterbildungen und vorteilhafte Ausgestaltungen der Erfindung ergeben sich aus den Unteransprüchen.

Da sich die Antenne der RFID-Ohrmarke in der Nähe des Tiergewebes befindet, ist durch kapazitive Einflüsse eine Verstimmung und eine Dämpfung möglich, die zu dem durch Bewegungen und durch Kontakt mit anderen Tieren oder Gegenständen variieren kann. Bei der Erfindung werden diese Einflüsse reduziert, indem statt eines Dipols ein asymmetrischer Monopol eingesetzt wird, bei dem eine Massefläche als Gegengewicht ausgebildet ist. Da die Massefläche bereits über eine größere Kapazität als der Strahler eines Dipols verfügt, wirken sich Abstandsänderungen zum Tiergewebe relativ weniger stark aus als bei einem Dipol. Die Massefläche muss auch nicht auf Resonanz abgestimmt und bemessen sein, sondern kann größere Längen- und Breitenabmessungen haben, als einem Viertel der Betriebswellenlänge entsprechen würde. Somit kann das Tiergewebe sogar vorteilhaft über eine kapazitive Kopplung mit der Massefläche in das Gegengewicht einbezogen werden.

Die induktive Kopplung einer Koppelschleife des Chipmoduls mit einem induktiven Koppelbogen der Antenne ermöglicht eine Impedanzanpassung zwischen dem Chip und der Antenne unabhängig von benachbarten kapazitiven Einflüssen, wie sie das Tiergewebe darstellt. Auch begrenzte mechanische Verlagerungen zwischen dem Chipmodul und dem Koppelbogen der Antenne, wie sie bei Körperkontakt, Kontakt mit anderen Gegenständen oder bei Verbiss auftreten können, stören die Kopplung nicht. Auch Beschädigungen der Massefläche durch Verbiss wirken sich kaum auf die Abstimmung der Antenne aus. Selbst bei einer Beschädigung des Strahlers ist ein völliger Ausfall der Lesbarkeit der RFID-Ohrmarke unwahrscheinlich. Allerdings ist dann mit einer Abnahme der Lesereichweite zu rechnen.

Vorzugsweise sind die geometrischen Schwerpunkte des Gegengewichts und des Chipmoduls dichter am Verschlussansatz angeordnet sind als das Strahlerelement.

Dadurch ist die Kopplung des Gegengewichts mit dem Tiergewebe enger, wodurch Variationen der Kopplung verringert werden und das Tiergewebe stärker in das Gegengewicht einbezogen wird. Umgekehrt ist das Strahlerelement weiter vom Tiergewebe entfernt und wird somit weniger verstimmt und gedämpft. Das Chipmodul ist wegen seines geringeren Abstands vom Tiergewebe weniger gegen Schäden durch Verbiss gefährdet, da die Wahrscheinlichkeit von Beschädigungen der RFID-Ohrmarke an den äußeren, vom Verschlusselement entfernten Enden größer als am Verschlusselement ist.

Das Strahlerelement kann mechanisch gegenüber der Viertel-Wellenlänge der Betriebsfrequenz des RFID-Transponders verkürzt und durch eine Dachkapazität gegenüber dem Gegengewicht elektrisch verlängert sein.

Auf diese Weise kann das Strahlerelement in seinen Abmessungen an die übliche genormte Größe von RFID-Ohrmarken angepasst und vollständig in den Markenträger integriert werden. Die Dachkapazität gegenüber dem Gegengewicht sorgt außerdem dafür, dass der kapazitive Einfluss durch das Tiergewebe relativ geringer ist und somit die Resonanzfrequenz des Strahlerelements nur wenig durch das Tiergewebe beeinflusst wird.

Das Chipmodul kann eine größere Biegesteifigkeit aufweisen als die Antenne einschließlich des sie umkapselnden Markenträgers.

Während der Markenträger zur Vermeidung von Verletzungen und Beschädigungen biegsam ist, damit er bei Kontakt mit anderen Tieren oder Gegenständen oder bei Verbiss nachgeben kann, würde sich ein Verbiegen des Chipmoduls schädlich auf dessen Funktion auswirken. Indem das Chipmodul biegesteifer ausgeführt wird, bleiben der Kontakt zwischen dem Chip und der Koppelschleife und die Ausrichtung und Form der Koppelschleife selbst auch bei äußerer Krafteinwirkung erhalten. Da das Chipmodul im Vergleich zu den Abmessungen des Markenträgers klein ist beeinträchtigt die höhere Biegesteifigkeit des Chipmoduls die Biegeeigenschaften des Markenträgers nur geringfügig. Das Nachgeben bei Kontakt mit anderen Tieren oder Gegenständen oder bei Verbiss bleibt daher erhalten.

Vorzugsweise besteht die Antenne aus einer leitfähig beschichteten Folie oder aus einem flexiblen dünnen metallischen Blech.

Diese Ausführung legt die mechanische Form der Antenne reproduzierbar fest und bietet somit die Gewähr für einheitliche elektromagnetische Eigenschaften. Die Ausführung ist in Richtung der Ebene der Folie oder des Blech stabil, senkrecht zur Richtung der Ebene aber biegsam. Dadurch wird erreicht, dass die elektromagnetischen Eigenschaften der Antenne konstant bleiben, die Biegsamkeit des Markenträgers aber erhalten bleibt. Außerdem reduziert die Ausführung die Herstellungskosten bei großen Stückzahlen. So kann das Blech kostengünstig als Stanzteil hergestellt werden.

Im Bereich der Massefläche des Gegengewichts der Antenne können Positionierlöcher angeordnet sein, mittels denen die Antenne durch Positionierstifte innerhalb einer Spritzform oder innerhalb einer Halbschale des Markenträgers positionierbar ist.

Dadurch wird die Ausrichtung der Antenne innerhalb des Markenträgers gleichbleibend gewährleistet und die Herstellung vereinfacht. Die fehlende Masse der Massefläche durch die Positionierlöcher hat hingegen auf die elektromagnetischen Eigenschaften nur unwesentlichen Einfluss.

Vorzugsweise bestehen der Markenträger und der Verschlussansatz aus Kunststoff.

Dadurch sind das Chipmodul und die Antenne gegen chemische Umwelteinflüsse geschützt und auch mechanischen Einwirkungen nicht direkt ausgesetzt.

Bei einer praktischen Ausführung bestehen die leitfähig beschichtete Folie oder das flexible dünne metallische Blech aus einem druckfesten, temperaturbeständigen spritzgussverträglichen Material.

Dadurch können der Markenträger und der Verschlussansatz im Spritzgussverfahren hergestellt werden, wobei die leitfähig beschichtete Folie oder das flexible dünne metallische Blech zuvor bereits in der Spritzform liegen und somit vom eingespritzten Kunststoff umschlossen werden, ohne dass dabei eine Veränderung oder Beschädigung eintritt.

Nachfolgend wird die Erfindung anhand eines Ausführungsbeispiels erläutert, das in der Zeichnung dargestellt ist. Darin zeigen:
- Fig. 1: zeigt eine Draufsicht auf eine geöffnete RFID-Ohrmarke für Rinder und
- Fig. 2: zeigt eine Draufsicht auf eine geöffnete RFID-Ohrmarke für Schweine.

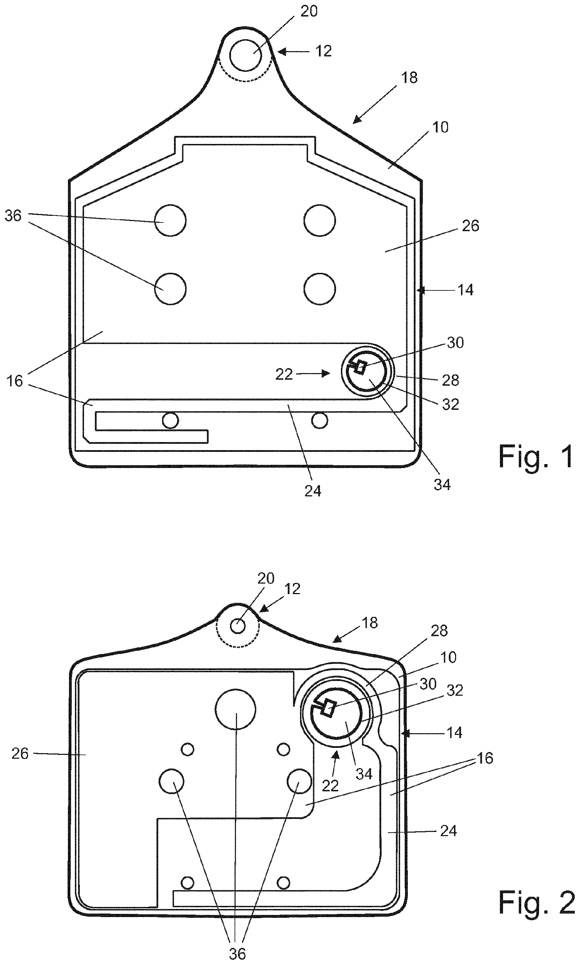

Die in den Figuren 1 und 2 dargestellten geöffneten RFID-Ohrmarken weisen jeweils eine halbe Schale eines Markenträgers 10 mit einem Verschlussansatz 12 und einem eingebetteten RFID-Transponder 14 auf. Die Darstellungen sind nicht maßstabsgerecht. Die RFID-Ohrmarke für Schweine ist kleiner als die RFID Ohrmarke für Rinder. Auch das Design der jeweiligen Antenne 16 kann sich unterscheiden und es wurden hier zwei unterschiedliche Ausführungen gewählt. Das Grundprinzip des Aufbaus ist jedoch gleich, weshalb auch die gleichen Bezugszeichen verwendet werden.

Im betriebsfertigen Zustand ist umfasst jede RFID-Ohrmarke einen zweischaligen Markenträger 10, der zwischen den beiden Schalen einen RFID-Transponder 14 einkapselt. Der RFID-Transponder wäre somit nicht sichtbar. Der Markenträger 10 besteht aus Kunststoff, hat eine flache, rechteckige Gestalt mit einem dachförmigen Ansatz 18, wobei am freien Ende des Ansatzes ein Verschlusselement 20 angeordnet ist. Das Verschlusselement 20 dient zur Fixierung eines hier nicht dargestellten Dorns eines Verschlussnagels aus einem Kopf und dem Dorn, wobei der Dorn das Tiergewebe durchdringt, so dass dieses zwischen dem dachförmigen Ansatz 18 des Markenträgers 10 und dem Kopf des Verschlussnagels formschlüssig eingefasst ist.

Der im Inneren des Markenträgers angeordnete RFID-Transponder 14 umfasst ein Chipmodul 22 und eine Antenne 16. Die Antenne 16 ist ein asymmetrischer Monopol aus einem Strahlerelement 24 und einem als Massefläche ausgebildeten Gegengewicht 26. Das Strahlerelement 24 ist mit dem Gegengewicht 26 an seinem hochfrequenzmäßig kalten Ende galvanisch über einen Koppelbogen 28 verbunden. Im Inneren der von dem Koppelbogen 28 teilweise umschlossenen Fläche befindet sich das Chipmodul 22, das seinerseits aus einem Chip 30 und einer Koppelschleife 32 auf einem Substrat 34 besteht. Die Koppelschleife 32 ist galvanisch mit Anschlüssen des Chips 30 verbunden und induktiv mit dem Koppelbogen 28 gekoppelt.

Geometrischen Schwerpunkte des Gegengewichts 26 und des Chipmoduls 22 sind dichter am Ansatz 18 des Verschlusselements angeordnet als der Schwerpunkt des Strahlerelements 24. Dadurch befinden sich das Gegengewicht 26 und das Chipmodul 22 auch dichter am Tiergewebe als das Strahlerelement 24. Das Gegengewicht 26 ist so kapazitiv eng mit dem Tiergewebe gekoppelt, während das Strahlerelement 24 entfernt vom Tiergewebe liegt und somit nur wenig verstimmt und gedämpft wird. Die Anordnung des Chipmoduls 22 dichter am Tiergewebe bewirkt, dass es weniger von Verbiss betroffen ist als das freie Ende des Markenträgers, also das vom Verschlusselement weg weisende Ende.

Das Strahlerelement 24 ist mechanisch gegenüber der Viertel-Wellenlänge der Betriebsfrequenz des RFID-Transponders 14 verkürzt und durch eine Dachkapazität gegenüber dem Gegengewicht 26 elektrisch verlängert. Die Dachkapazität wird hier durch die parallel zum hochfrequenzmäßig heißen Ende des Strahlerelements 24 verlaufende Kante des Gegengewichts 26 gebildet.

Das Chipmodul 22 umfasst ein Substrat 34, auf dem der Chip 30 und die induktive Koppelschleife 32 angeordnet sind. Das Substrat 34 besteht vorzugsweise aus Leiterplattenmaterial und besitzt eine größere Steifigkeit als der Kunststoff des Markenträgers 10. Somit weist das Chipmodul 22 eine größere Biegesteifigkeit auf als die Antenne 16 einschließlich des sie umkapselnden Markenträgers 10. Eine Zerstörung des Chips 30, der Koppelschleife 32 und der galvanisch in Kontakte zwischen der Koppelschleife 32 und dem Chip 30 ist daher weitgehend ausgeschlossen. Selbst bei einer geringfügigen Verlagerung des Chipmoduls 22 gegenüber dem Koppelbogen 28 bleibt eine induktive Kopplung gewährleistet. Beim Lesen des RFID-Transponders 14 ist auch dann noch möglich, wenn das Strahlerelement 24 teilweise oder ganz beschädigt oder getrennt wird. Lediglich die Reichweite verringert sich in diesem Fall. Ein Lesen mit einer unmittelbar an die RFID-Ohrmarke angenäherten induktiven Antenne bleibt möglich.

Die Antenne kann aus einer leitfähig beschichteten Folie oder aus einem flexiblen dünnen metallischen Blech bestehen. Dieses kann als Stanzteil hergestellt werden. Im Bereich der Massefläche des Gegengewichts der Antenne sind Positionierlöcher 36 angeordnet, mittels denen die Antenne durch Positionierstifte innerhalb einer Spritzform oder innerhalb einer Halbschale des Markenträgers 10 positionierbar ist.

## Patentansprüche

1. RFID-Ohrmarke, bestehend aus einem Markenträger (10) mit einem Verschlussansatz (12), der mittels eines Verschlusselements (20) am Ohr eines Tieres befestigbar ist, und bestehend aus einem im Inneren des Markenträgers (10) angeordneten, eingekapselten RFID-Transponder (14), der einen Chip (30) und eine Antenne (16) umfasst, **dadurch gekennzeichnet dass** die Antenne (16) aus einem Strahlerelement (24), einem als Massefläche ausgebildeten Gegengewicht (26) und einem induktiven Koppelbogen (28) besteht und der Chip (30) zusammen mit einer an Kontakte des Chips (30) angeschlossenen Koppelschleife (32) ein Chipmodul (22) ist, das innerhalb des Koppelbogens (28) angeordnet ist und die Koppelschleife (32) induktiv mit dem Koppelbogen (28) gekoppelt ist.

2. RFID-Ohrmarke nach Anspruch 1, **dadurch gekennzeichnet, dass** die geometrischen Schwerpunkte des Gegengewichts (26) und des Chipmoduls (22) dichter am Verschlussansatz (12) angeordnet sind als das Strahlerelement (24).

3. RFID-Ohrmarke nach Anspruch 1 oder 2, **dadurch gekennzeichnet, dass** das Strahlerelement (24) mechanisch gegenüber der Viertel-Wellenlänge der Betriebsfrequenz des RFID-Transponder verkürzt ist und durch eine Dachkapazität gegenüber dem Gegengewicht (26) elektrisch verlängert ist.

4. RFID-Ohrmarke nach einem der Ansprüche 1-3, **dadurch gekennzeichnet, dass** das Chipmodul (22) eine größere Biegesteifigkeit aufweist als die Antenne (16) einschließlich des sie umkapselnden Markenträgers (10).

5. RFID-Ohrmarke nach einem der Ansprüche 1-4, **dadurch gekennzeichnet, dass** die Antenne (16) aus einer leitfähig beschichteten Folie oder aus einem flexiblen dünnen metallischen Blech besteht.

6. RFID-Ohrmarke nach einem der Ansprüche 1-5, **dadurch gekennzeichnet, dass** im Bereich der Massefläche des Gegengewichts (26) der Antenne (16) Positionierlöcher (36) angeordnet sind, mittels denen die Antenne (16) durch Positionierstifte innerhalb einer Spritzform oder innerhalb einer Halbschale des Markenträgers (10) positionierbar ist.

7. RFID-Ohrmarke nach einem der Ansprüche 1-6, **dadurch gekennzeichnet, dass** der Markenträger (10) und der Verschlussansatz (12) aus Kunststoff bestehen.

8. RFID- Ohrmarke nach Anspruch 7, **dadurch gekennzeichnet, dass** die leitfähig beschichtete Folie oder das flexible dünnen metallischen Blech aus einem druckfesten, temperaturbeständigen spritzgussverträglichen Material bestehen.

## Claims

1. An RFID ear tag consisting of a tag carrier (10) with a fastening lug (12) which can be attached to the ear of an animal by means of a fastening element (20), and consisting of an encapsulated RFID transponder (14), which is arranged inside the tag carrier (10) and which comprises a chip (30) and an antenna (16), **characterised in that** the antenna (16) consists of an emitting element (24), a counterweight (26) formed as a ground surface and an inductive coupling curve (28), and the chip (30) together with a coupling loop (32) which is connected to contacts of the chip (30) is a chip module (22) which is arranged inside the coupling curve (28), and the coupling loop (32) is inductively coupled with the coupling curve (28).

2. The RFID ear tag according to Claim 1, **characterised in that** the geometric centres of gravity of the counterweight (26) and of the chip module (22) are arranged closer to the fastening lug (12) than the emitting element (24).

3. The RFID ear tag according to Claim 1 or 2, **characterised in that** the emitting element (24) is mechanically shortened relative to the quarter wavelength of the operating frequency of the RFID transponder, and is electrically extended by a top load relative to the counterweight (26).

4. The RFID ear tag according to any one of Claims 1-3, **characterised in that** the chip module (22) has a greater bending stiffness than the antenna (16) including the tag carrier (10) encapsulating it.

5. The RFID ear tag according to any one of Claims 1-4, **characterised in that** the antenna (16) consists of a conductively coated film or of a flexible, thin metallic sheet.

6. The RFID ear tag according to any one of Claims 1-5, **characterised in that,** in the region of the ground surface of the counterweight (26) of the antenna (16), positioning holes (36) are arranged by means of which the antenna (16) can be positioned inside an injection mould or inside a half shell of the tag carrier (10) by positioning pins.

7. The RFID ear tag according to any one of Claims 1-6, **characterised in that** the tag carrier (10) and the fastening lug (12) are made of plastic.

8. The RFID ear tag according to Claim 7, **characterised in that** the conductively coated film or the flexible, thin metallic sheet consist of a pressure-proof, temperature-resistant material which is compatible with injection moulding.

## Revendications

1. Etiquette d'oreille RFID constituée par un porte-étiquette (10) avec un embout de verrouillage (12), qui peut être fixé à une oreille d'un animal au moyen d'un élément de verrouillage (20), et constituée par un transpondeur RFID (14) encapsulé qui est disposé à l'intérieur du porte-étiquette (10), transpondeur RFID (14) qui comprend une puce (30) et une antenne (16), **caractérisée en ce que** l'antenne (16) est constituée par un élément de rayonnement (24), un contre-poids (26) conçu comme plan de masse et un cintrage de couplage inductif (28) et **en ce que** la puce (30) forme, avec une boucle de couplage (32) raccordée à des contacts de la puce (30), un module de puce (22) qui est disposé à l'intérieur du cintrage de couplage (28) et **en ce que** la boucle de couplage (32) est couplée par induction au cintrage de couplage (28).

2. Etiquette d'oreille RFID suivant la revendication 1, **caractérisée en ce que** les barycentres géométriques du contre-poids (26) et du module à puce (22) sont disposés plus près de l'embout de verrouillage (12) que l'élément de rayonnement (24).

3. Etiquette d'oreille RFID suivant la revendication 1 ou 2, **caractérisée en ce que** l'élément de rayonnement (24) est raccourci mécaniquement par rapport au quart de la longueur d'onde de la fréquence de fonctionnement du transpondeur RFID et prolongé électriquement par rapport au contre-poids (26) par une capacité de sommet.

4. Etiquette d'oreille RFID suivant une des revendications 1 à 3, **caractérisée en ce que** le module de puce (22) présente une résistance à la flexion supérieure à celle de l'antenne (16) y compris le porte-étiquette (10) qui l'encapsule.

5. Etiquette d'oreille RFID suivant une des revendications 1 à 4, **caractérisée en ce que** l'antenne (16) est constituée par une feuille à revêtement conducteur ou par une mince tôle métallique souple.

6. Etiquette d'oreille RFID suivant une des revendications 1 à 5, **caractérisée en ce que** des trous de positionnement (36) sont disposés dans la zone du plan de masse du contre-poids (26) de l'antenne (16), au moyen desquels l'antenne (16) peut être positionnée par l'intermédiaire de tiges de positionnement à l'intérieur d'un moule à injection ou à l'intérieur d'une demi-coque du porte-étiquette (10).

7. Etiquette d'oreille RFID suivant une des revendications 1 à 6, **caractérisée en ce que** le porte-étiquette (10) et l'embout de verrouillage (12) sont en matière artificielle.

8. Etiquette d'oreille RFID suivant la revendication 7, **caractérisée en ce que** la feuille à revêtement conducteur ou la mince tôle métallique souple sont en un matériau résistant à la pression, ainsi qu'aux températures et compatible avec un moulage par injection.
